Europäisches Patentamt

European Patent Office

Office européen des brevets

(11) Publication number: **0 196 277**
**A2**

# (12) EUROPEAN PATENT APPLICATION

(21) Application number: **86830041.9**

(22) Date of filing: **20.02.86**

(51) Int. Cl.⁴: **G01G 19/413 , G01G 19/38**

(30) Priority: **22.02.85 IT 8333185**

(43) Date of publication of application:
**01.10.86 Bulletin 86/40**

(84) Designated Contracting States:
**AT BE CH DE FR GB LI LU NL SE**

(71) Applicant: **CASAGRANDE SpA**
**Viale Venezia, 97**
**I-33074 Fontanafredda (PN)(IT)**

(72) Inventor: **Casagrande, Bruno**
**Via Malignani 3**
**I-33074 Fontanafredda PN(IT)**

(74) Representative: **Petraz, Gilberto Luigi**
**G.L.P. S.a.s. di Gilberto Petraz P.le Cavedalis 6/2**
**I-33100 Udine(IT)**

(54) Coordinator device for diets.

(57) Coordinator device for diets (10) which is suitable to act as a control and/or prescription element and comprises a data entry area, an area for selection of the type of diet and a response area.

EP 0 196 277 A2

## "COORDINATOR DEVICE FOR DIETS"

This invention concerns a coordinator device for diets. To be more exact, the invention concerns a device able to provide persons dieting with an aid for reference and continuous control purposes.

It is known that a person undertakes a diet for several reasons, which may range from compelling health problems to problems of pride in personal appearance.

It is also known that a diet is drawn up as a more or less general indication together with a relative and not very forceful adaptation to the person dieting, such adaptation however not being properly linked to the temporary condition of the individual in question.

It is further known that a diet, like any other corrective treatment applied to a living organism, is in itself worthwhile only if such treatment is suited and proportioned to the actual requirements of the organism and does not coincide with an unfavourable psychological condition.

Moreover, human laziness is notorious, particularly so in every person undergoing a diet, since such a person is psychologically in a condition of inborn opposition to an act which is in contrast with his own unconscious primary security.

Such laziness compels the person drawing up the diet to indicate possible menus which are already pre-arranged and repetitive, and such menus are then normally accepted passively by the person dieting.

Such monotony of menus together with the act of passive acceptance and therefore with a linked underlying discontent contributes towards an accentuation of the psychological dissociation of the person dieting, with a resulting lack of participation and with a lessening of the unconscious support required for the diet to provide the benefit hoped for.

For all these reasons and for yet others which will become clearer hereinafter, the present applicant has studied and embodied a device able to act as a worthwhile aid for diets.

The device is suitable for keeping under constant control the diet and its components in relation to the physical characteristics of the subject of the diet and to his therapeutic requirements.

The device is able to control the caloric content of the foodstuffs taken by the subject during a meal, or a day, or a pre-set or pre-settable period and to compare that caloric content with a given threshold.

Such threshold will depend on the characteristics of the subject (age, weight, morphology, activity, etc.) and can be set on the device, for instance with a value prescribed by a doctor, and be suitably stored, or else can be calculated by the device itself on the basis of data fed into device.

According to the invention a coordinator device for diets comprises specific areas and can be supplemented with one or more optional areas suitable for widening its field of application. The fields or specific areas, or basic areas, are substantially as follows:

-an area for data entry,

-an area for selection of the type of diet, and

-a response and/or prescription area.

The optional areas may include areas suitable for indicating the type of meal, the humoral state of the subject, etc.

If we analyse the areas according to a functional selection of the areas themselves, we find that the data entry area may consist of a scale with a possible automatic tare setting, the scale being suitable to measure the weight of the substances forming a part of the diet in the formulation momentarily selected.

As a variant instead of the scale, means may be provided for manual entry of the weight on the device, although such variant is not very advisable since it permits cheating by the subject of the diet.

Such scale may be supplemented with means able to show the type of substance weighed.

The data entry area may be completed also with means able to indicate the sex and age of the subject and also the type of activity performed by such subject, together with any other auxiliary data.

The age may be indicated either as an age by itself (a numerical value) or as a date of birth with day, month and year.

The area for selection of type of diet will comprise means able to permit selection of the type of diet chosen and, if so required, to enable any interpretational amendments to be entered, depending on the general or momentary pathology of the individual in question.

The areas for entry of data and for selection of the type of diet may be integrated, at least partly, by arranging to provide each person dieting with a badge giving his salient data such as, for instance, his date of birth, the type of diet and any specific notes concerning the interpretation and application of the diet for that person. In such a case a badge reader will be enough to enter all the data required.

The response and/or prescription area may be of a viewer type (display, tube, etc.) or, or also, of a printer type to provide a written note for the person concerned.

With these primary areas may be associated, as we said earlier, one or more secondary areas, such as an indication of the meal (first, second, third, daily menu, weekly menu, etc.), and indication of the humoral condition of the subject, etc.

The means to indicate the humoral condition of the subject may also be omitted externally provided that arrangements are made to enter the date of birth in the data entry area; such entry of the date of birth enables the biorhythm to be calculated and perhaps to be integrated with the meteoric influences (the device may include means to measure pressure, humidity and temperature) and with the effects caused by the position of the moon and/or sun as now ascertained.

Sound and visual means may also be provided which have a psychological effect on the person dieting with a view to creating the best personal conditions for obtaining the benefits of the diet.

The invention is therefore embodied with a coordinator device for diets which is suitable to act as a control and/or prescription element and is characterized in that it comprises a data entry area, an area for selection of the type of diet and a response area.

Let us now see a preferred embodiment of the invention with the help of the attached figure, which is given as a non-restrictive example and in which:-

Fig.1 gives a three-dimensional view of a device according to the invention.

The figure shows a highly equipped device for the purpose only of displaying the invention more clearly, but the invention may be embodied with a device having various outer forms and various contents.

A device 10 comprises a body 13 on which is provided a scale pan 11. A tare selector is also included according to the invention.

The device 10 can act as a normal weighing scale or as a diet coordinator device.

A display 14 is provided to show the weight and/or information (calories, for instance) linked to the diet. When the device 10 is acting as a diet coordinator, the display 14 may also be omitted or be deactivated, as we shall see later.

The device 10 has to have at least three well defined areas so as to carry out its task as a coordinator for diets. Such areas are a data entry area, an area for selection of the type of diet and a response and/or prescription area.

Besides these entry, selection and response areas, the device 10 has to be either connected to a computer/store of data or to possess such functions within itself.

Besides the scale pan 11, the data entry area comprises specific or general indicators. In fact, the data entry area may be completed with a generic keyboard or else with keyboards having specialized functions. Thus instead of the keyboard or keyboards, or instead of a part of a keyboard or keyboards, there may be a badge reader 17 and/or a reader of cassettes (or other supports) 16.

The specialized keyboards may be suitable for the entry of data of persons 18, such as data regarding age and/or weight and/or height and/or type of activity, etc; and be suitable for the entry of indication of products such as the type of foodstuffs being weighed, so that the calories can be related precisely to the weight measured; and be suitable for the entry of an indicaton of the type of diet selected 20, so as to relate the indications to the type of diet undertaken, perhaps by the provision of corrective and/or personalizing keys so as to make the selected diet less generic; and be suitable to enter an indication of the type of meal 21, whether the meal be breakfast, a snack, lunch or dinner; and be suitable to enter an indication of the humoral condition of the person 22, etc.

Instead of the data entry area 18 (data of person), diet selection area 20 and response area (humoral condition) 21, a badge reader 17 may be provided which, by giving personalized data shown on a specific badge, enables the device to obtain such data, correlating them to the conditions provided by the biorhythm curves.

Likewise, instead of the area 20 for selection of the type of diet, a reader 16 may be provided which can not only supply a personalized diet (read from a cassette or floppy disk, for instance) but can also convert the foodstuffs, on the basis of their weight, into the indices envisaged - (points, calories, percentages, etc.) in the diet.

A printer 15 may be provided in cooperation with the display 14 or in replacement of the display 14, even temporarily, and be able to print all the data deemed necessary.

To complete the device 10, there may be included a measurer 24 of atmospheric conditions which is suitable for correlating the diet to the temperature, pressure and humidity or to one or more of such aspects of the atmospheric conditions.

A loudspeaker or sound emitter 23 may be provided which can warn the person dieting if, for instance, the weight of his food is too great. Such loudspeaker 23, which may also be associated with luminous indicators, can work also during the whole operation of preparation of the diet and can broadcast agreeable and relaxing sounds and/or lights.

The device can be equipped to integrate the data entered with the influence of the sun and/or moon.

An example of the employment of the device may be as follows. A person dieting enters the following data by means of a keyboard 18: his identification code, date of birth, sex, height, weight, type of activity carried on (if the device contains a memory, it is enough to enter the identification code and approved weight); he indicates by means of a keyboard 20 the type of diet selected and enters any corrective details recommended by his doctor; he indicates by means of a keyboard 21 that he wants:

-a weekly and/or daily programme and/or a specific programme for one single meal;

-all the indications begin to show on the display 14 and are defined by the printer 15;

-the printer 15 can provide, wholly or in part, the following information, for instance:

-name of the person dieting,

-date of printing,

-type of diet selected,

-atmospheric conditions,

-diet plan specifically indicated, complete with:

-biorhythmic state

-breakfast (composition)

-snack (composition)

-lunch (composition)

-dinner (composition)

-permitted variants of composition.

On the basis of the meal chosen, the same person dieting will then indicate the meal by means of the keyboard 21 and will put on the scale pan 11, if necessary, a plate - (of which the weight is set in the device by a push button 12), and the components of the meal are placed on the plate one by one.

By selecting the type of foodstuff by means of the keyboard 19, a user can check its quantity or caloric content directly in relation to the weight and type index of the diet selected.

Any values greater than those prescribed are indicated by warning lights and/or sounds.

## Claims

1 -Coordinator device for diets (10) which is suitable to act as a control and/or prescription element and is characterized in that it comprises a data entry area, an area for selection of the type of diet and a response area.

2 -Coordinator device for diets (10) as claimed in Claim 1, in which the data entry area includes at least one weighing scale means (11).

3 -Coordinator device for diets (10) as claimed in Claim 1 or 2, in which the data entry area includes at least one keyboard.

4 -Coordinator device for diets (10) as claimed in Claims 1 and 3, in which the data entry area includes several specialized keyboards.

5 -Coordinator device for diets (10) as claimed in any claim hereinbefore, in which the data entry area includes at least one reader (16) of cassettes.

6 -Coordinator device for diets (10) as claimed in any claim hereinbefore, in which the data entry area includes at least one badge reader (17).

7 -Coordinator device for diets (10) as claimed in any claim hereinbefore, in which the data entry area is able to acquire at least the data of persons (18).

8 -Coordinator device for diets (10) as claimed in any claim hereinbefore, in which the data entry area is able to acquire at least some auxiliary data too (21-24).

9 -Coordinator device for diets (10) as claimed in any claim hereinbefore, in which the area for selection of the type of diet (20) includes at least one keyboard.

10 -Coordinator device for diets (10) as claimed in any claim hereinbefore, in which the area for selection of the type of diet (20) includes at least one reader.

11 -Coordinator device for diets (10) as claimed in any claim hereinbefore, in which the area for selection of the type of diet (20) is able to acquire a threshold relating to the caloric content of the programmed foodstuffs.

12 -Coordinator device for diets (10) as claimed in Claims 1 and 11, in which the threshold is set from outside (20).

13 -Coordinator device for diets (10) as claimed in Claims 1 and 11, in which the threshold is calculated by the device (10) itself on the basis of data (18-20-21) acquired.

14 -Coordinator device for diets (10) as claimed in any claim hereinbefore, in which the response area includes at least display means.

15 -Coordinator device for diets (10) as claimed in any claim hereinbefore, in which the response area includes at least printer means.

16 -Coordinator device for diets (10) as claimed in any claim hereinbefore, in which the response area includes at least sound emitter means (23).

17 -Coordinator device for diets (10) as claimed in any claim hereinbefore, in which the response area provides at least data relating at least indirectly to quantities of foodstuffs.

18 -Coordinator device for diets (10) as claimed in any claim hereinbefore, in which the response area provides also the data of persons as keyed in the area of acquisition of data (18-16-17).

19 -Coordinator device for diets (10) as claimed in any claim hereinbefore, in which the response area provides auxiliary data too.

20 -Coordinator device for diets (10), being substantially as described and shown and for the purposes allowed.